# EUROPEAN PATENT APPLICATION

(11) **EP 1 702 708 A1**
(43) Date of publication of application: **20.09.2006**
(21) Application number: 04798230.1
(22) Date of filing: 15.11.2004
(51) Int. Cl.: B23K 11/31

(54) **CLAMPING JAW FOR AUTOMATED WELDING INSTALLATIONS**

(30) Priority: 24.11.2003 ES 200302739; 20.05.2004 ES 200401215
(71) Applicant: Misati, S.L., 08028 Barcelona (ES)
(72) Inventor: SARABIA TRILLA, Miguel, E-08028 Barcelona (ES)
(74) Representative: PROPI, S.L.
(86) International application number: PCT/ES2004/000503
(87) International publication number: WO 2005/049260

(57) **Abstract**

The invention relates to a clamping jaw which is intended for automated welding installations. The inventive clamping jaw comprises a body bearing fixed and mobile arms which are used to hold two or more sheets such that said sheets can be handled during welding. The invention is **characterised in that** the aforementioned body takes the form of a central tubular element having two opposing lateral plates welded to the lower part thereof, in order to support the articulated arm and to guide the actuation rod thereof. According to the invention, a single articulated arm is disposed at the centre of the clamp assembly between the lateral support plates of the articulation shaft.

## Description

The present invention is destined to release an improved clamp for automated welding installations, adding some important improvements on what is known at the moment.

The clamp object of the present invention is specially intended for automated welding installations of automobiles bodyworks, with robotized grips and tools which have numerous clamps used to hold two or more sheets during spot or arc welding in a mobile or static process.

Fastening clamps are vital elements in the said automated welding installations, since the design and good working order of the welding installation depend to a great extent on the characteristics of the accuracy of activation, dimensions and easy assembly and dismantling, as well as easy maintenance.

The clamp object of the present invention is intended for obtaining numerous improvements with regard to the clamps known nowadays for the same function. Among these improvements, the following can be quoted:
- Constructive simplification and saving in the construction of the body, which is made with a central calibrated tube and lateral plates cut with laser beam. Thus, it is avoided the complex, high-cost manufacture of the body by machining from an element of rolled steel, as it is made nowadays;
- Reduction in transverse dimensions of the whole clamp by means of removing the lateral or exterior arms and placing at the rear of the clamp the position sensor of the mobile arm. These sensors, placed in an injected material housing, detect the position of the arm through its movement using an associate mobile metal band;
- Higher precision in detecting the angular position of the arm as a result of the execution of the detecting elements, as it has been specified;
- Higher protection against welding projections over all the sides of the clamp, and so the movement of the arm is, in particular, protected with a mobile central metal band, associated with the arm itself, which slides through a circular slot of the body. The mobile metal band covers all the movement of the arm;
- Reduction in transverse dimensions of the whole clamp by means of the realization of a central arm instead of lateral arms, which makes it possible for the transverse dimensions to decrease, for example, from the 62 millimetres of the clamps known at present to the 42 millimetres of the clamps object of this invention;
- Reduction in the diameter of the pneumatic cylinder used for activation. In this way, it can go from the 40 diameter used at present to the 32 diameter of the clamps of the invention;
- Easier assembly and dismantling of the spare ensemble of the clamp; thus the geometry in relation to the mounting is kept because the invention has a special way of centring with regard to the body;
- Reduction in air consumption of the clamp in a proportion close to 50%, which represents a significant saving on the operation of the welding installation.

In a variant of the present invention it has been planned to make a single body for the clamp, in which the lower body of the cylinder and the upper body of the mounting carrier of the fastening points have been determined. This mounting has the guides for the activation element of the arm of the said mounting, and it offers an extreme opening in which the arm of the clamp is fitted. Therefore, it is not necessary to use exterior closings in that part of the clamp as planned in the version of the invention reflected in the main patent.

The ends of the shaft of the arm of the clamp, which act on the elongated hole of the arm causing this arm to turn, are assembled with needle bearings on the guides of the body of the clamp that have a half-rod section.

Likewise, the clamp object of the present invention has planned to position guide bushings on its lateral sides. These guide bushings, arranged inside the orifices at the said sides, protrude in order to allow an easy and rapid centring in the tools where the clamp is assembled. This is very useful for the assembly and dismantling of clamps for spare part, maintenance and other purposes, since the centring position will be directly and immediately recovered.

The previous advantages, and others as well, and the specific makeup of an example of the execution of the fastening clamp for welding, according to the present invention, will be appreciated in more detail in the following description, with the help of the accompanying figures, in which:
Figure 1 shows the complete section of one clamp made in accordance with the present invention, with a bigger scale detail.

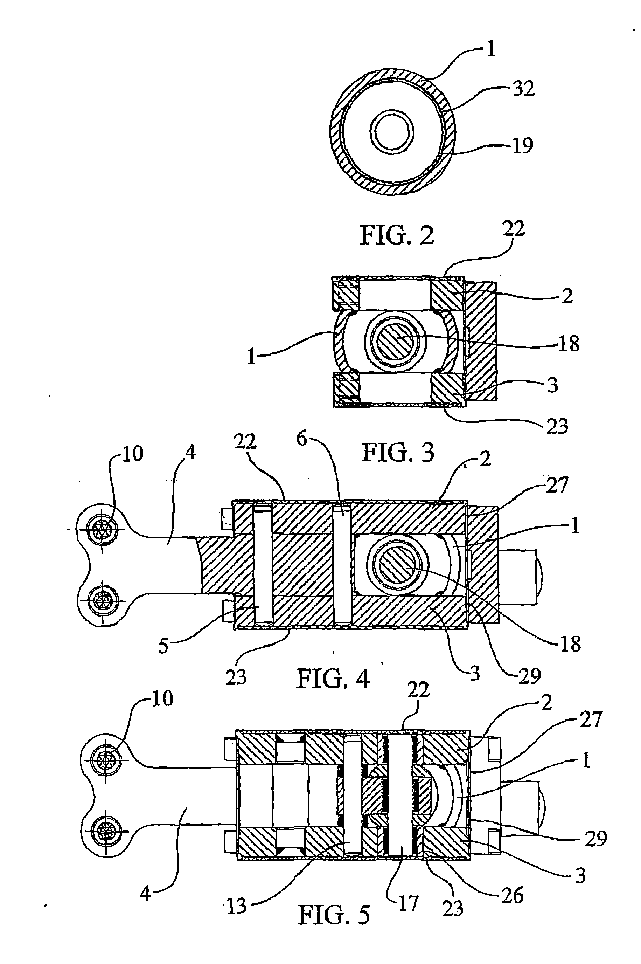

Figures 2, 3, 4 and 5 show each of the sections marked on figure 1.
Figure 6 shows a complete section similar to figure 1, but in a complete opening position of the clamp.
Likewise, figure 7 shows a longitudinal section in which it is observed how the cushioning mechanism is arranged.

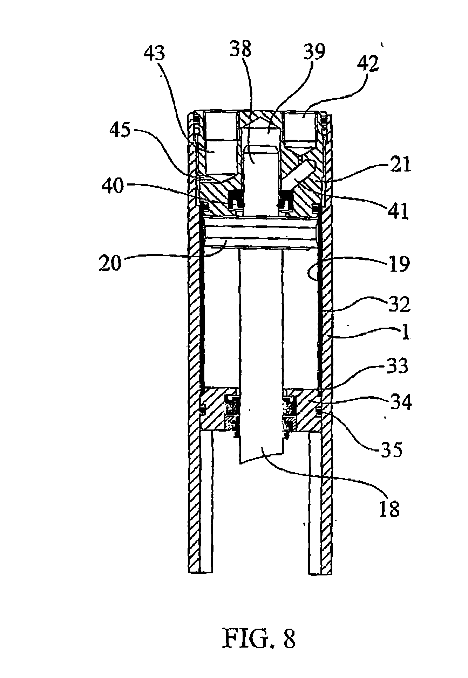

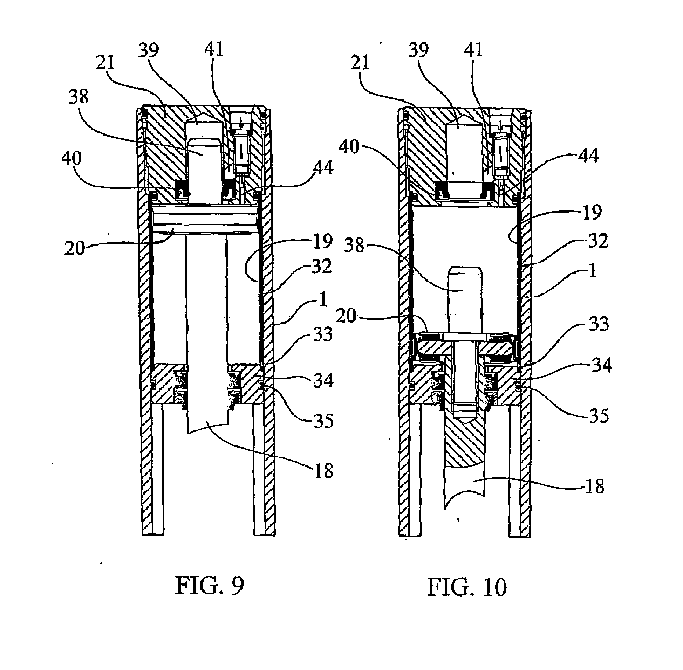

Figures 8, 9 and 10 are each of the details of different functional phases of the cushioning mechanism.
Figures 11, 12 and 13 represent each of the perspective views with the pieces dismantled, in which it is showed how the body and arms of the clamp are formed.
Figure 14 shows a perspective view with the pieces dismantled in which it is observed how the lateral plates and the protection metal band, which is provided with a longitudinal opening, are assembled.

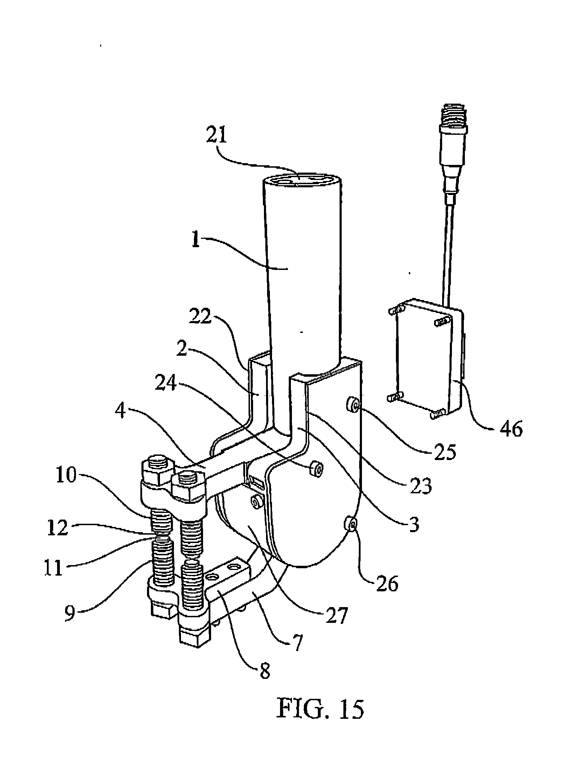

Figure 15 shows a perspective view of the ensemble of the clamp with the sensor device dismantled.

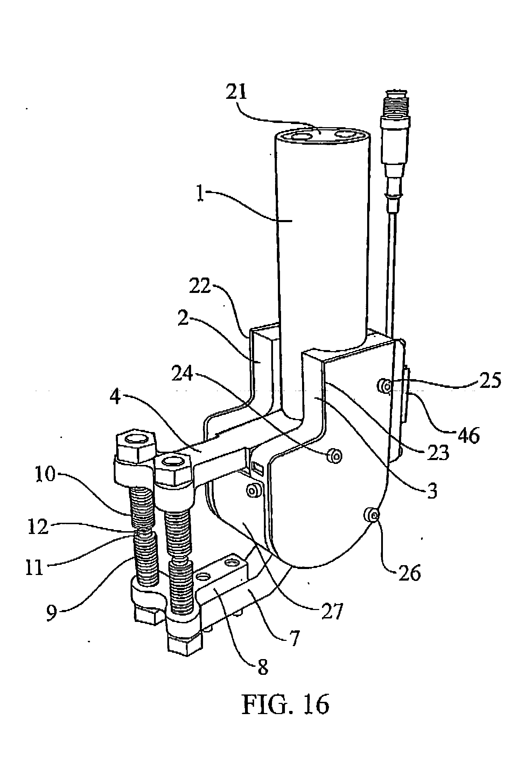

Figure 16 shows a similar view to figure 15 with the position-of-the-arm sensor device assembled at the rear of the clamp.
Figures 17, 18 and 19 show each of the perspective views of the special fastening and centring bracket of the clamp in relation to the grip or welding tool.
Figure 20 is a perspective view of the clamp without fastening screws, for simpler purposes.
Figure 21 shows a perspective view, similar to figure 20, with another turning arm.
Figure 22 shows a lateral view with a partial section of the clamp itself showing the position of the accessories that bear the fastening screws.
Figures 23 and 24 are each of the longitudinal sections of one clamp, according to the invention, with a turning arm in two positions turned at 90° from one another.
Figures 25, 26 and 27 show each of the sections marked on figure 24.
Figures 28 and 29 are each of the longitudinal sections of one clamp, according to the invention, similar to those of figures 23 and 24, corresponding to double-arm pincers.
Figures 30, 31 and 32 show the transverse sections marked on figure 29.
Figures 33 and 34 are views in lateral elevation of the clamp with the turning arm in two different positions, showing the positions of the orifices which are recipients of centring guide bushings.
Figure 35 shows the transverse section marked on figure 34.

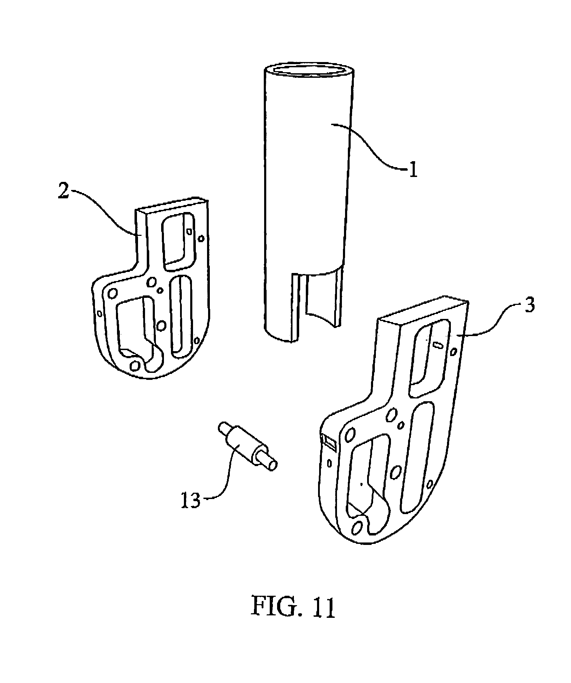

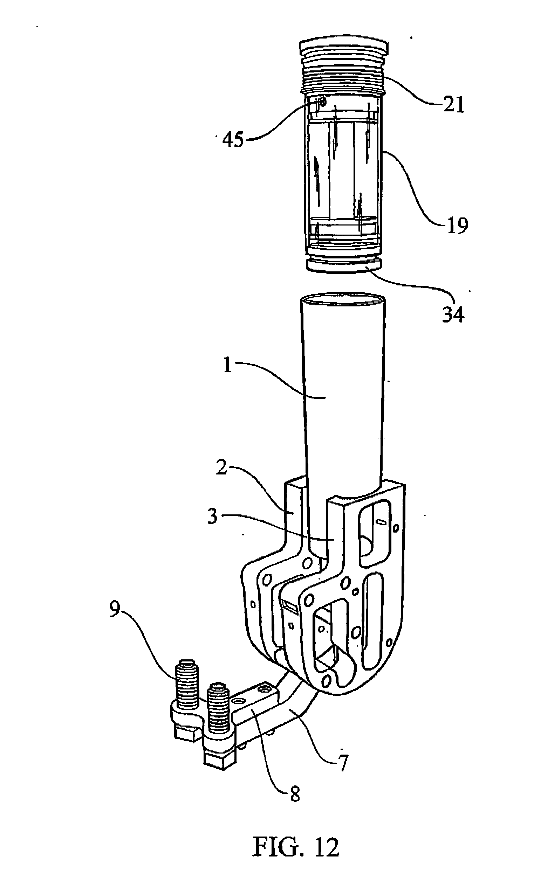

As it is seen in these figures, the ensemble of the welding clamp comprises one body -1-, made with a calibrated steel tube, and two lateral plates -2- and -3-, figure 11 and successive, cut from a calibrated plate, especially with laser beam, so that these lateral plates achieve a high dimensional precision and, therefore, they can be joined by welding to the central tubular element -1- , as it is seen in the whole unit in figure 12. These plates -2- and -3- present some lightening openings and some openings to guide the piston rod moving the lower arm of the clamp, as it will be seen in the following description.

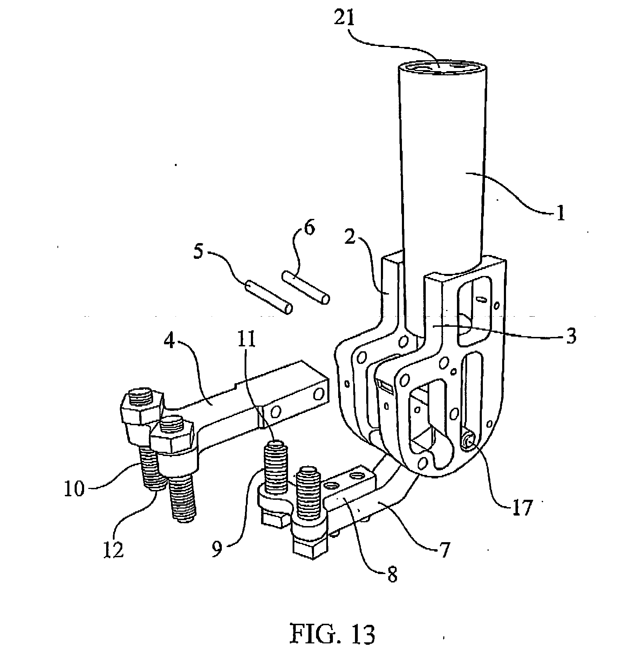

As it is seen in figure 13, the arms of the clamp are composed of the upper arm -4-, which is joined to plates - 2- and -3- with split pins or screws -5- and -6-, and the lower mobile arm or L-shaped arm -7-, which bears the removable mounting -8-. Both mountings -4- and -8- have assembled in conventional-type screws -9- and -10-, which are intended for tightening the sheets that will be handled. These screws can be of any type used in this technique, and in the drawing each screw is provided with ball-and-socket joints -11- and -12-, which allow an auto-alignment of the screws in relation to the sheets to fasten.

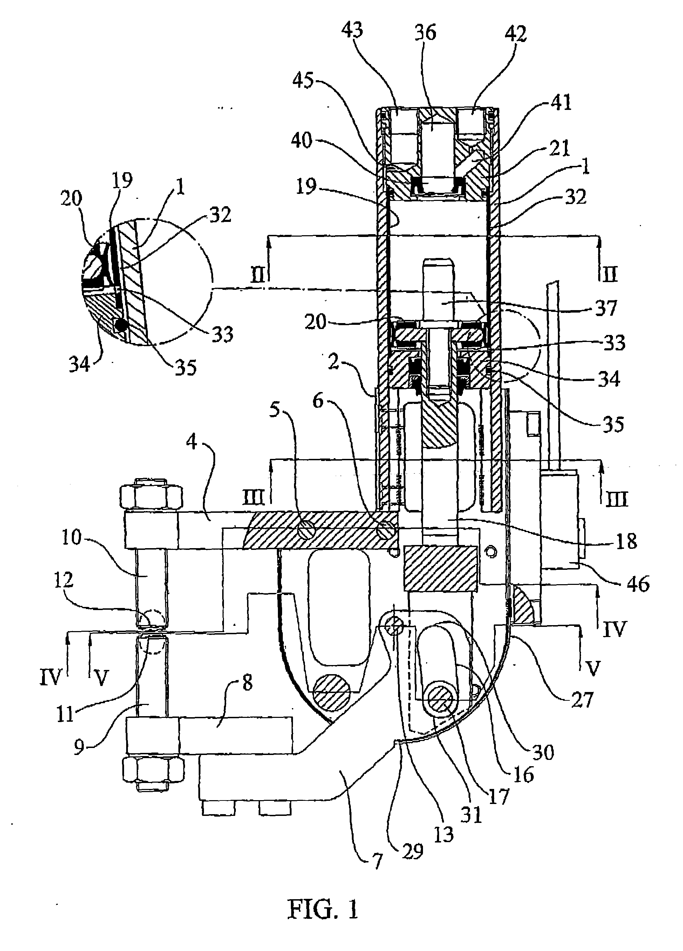

The L-shaped arm -7- turns on an transverse shaft -13- , figure 1, fitted together in the lateral plates -2- and - 3-.

The L-shaped arm itself -7- has a special-shaped elongated hole -16-, which will be explained in more detail. In this elongated hole, there is the roller -17- activated by the drive arm -18-, which is triggered by the ensemble of cylinder -19- and pneumatic piston -20- that are lodged in the tubular body -1-. The piston is jointly assembled to the upper end of the piston rod -18-.

The cover of the upper closing -21- of the cylinder - 19- can be combined with an element joined to the piston rod -18- in order to integrate a pneumatic shock absorber that will be explained later.

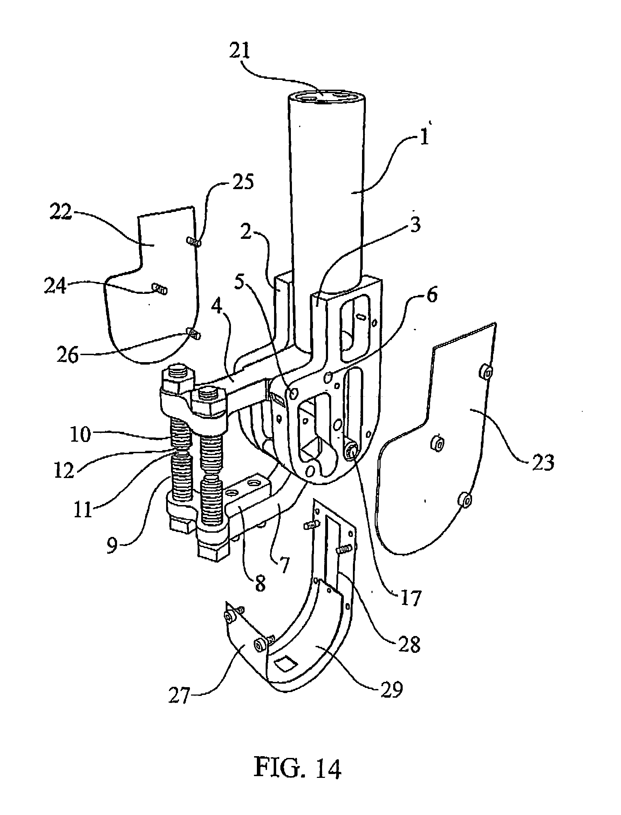

Lateral plates -2- and -3- are calibrated plates with a high-quality surface finish that can be closed by means of one lateral cover -22- and -23- each, figure 14. These lateral covers adapt and are fixed to the external surface of these plates -2- and -3- with, for example, screws, as the ones marked with numbers -24-, -25- and -26.

The opening created between plates -2- and -3- after joining the closing covers -22- and -23- is covered by a metal band -27-, which is fixed by some screws, showed in figure 14, and which presents a long straight window -28- in order to allow the arm -7- to pass and swing. The second metal band -29- is jointly combined with this movable L-shaped arm -7-, so that it constitutes a mobile protection shield that moves on the internal side of the metal band - 27-, and so welding projections and other strange bodies are prevented from going in.

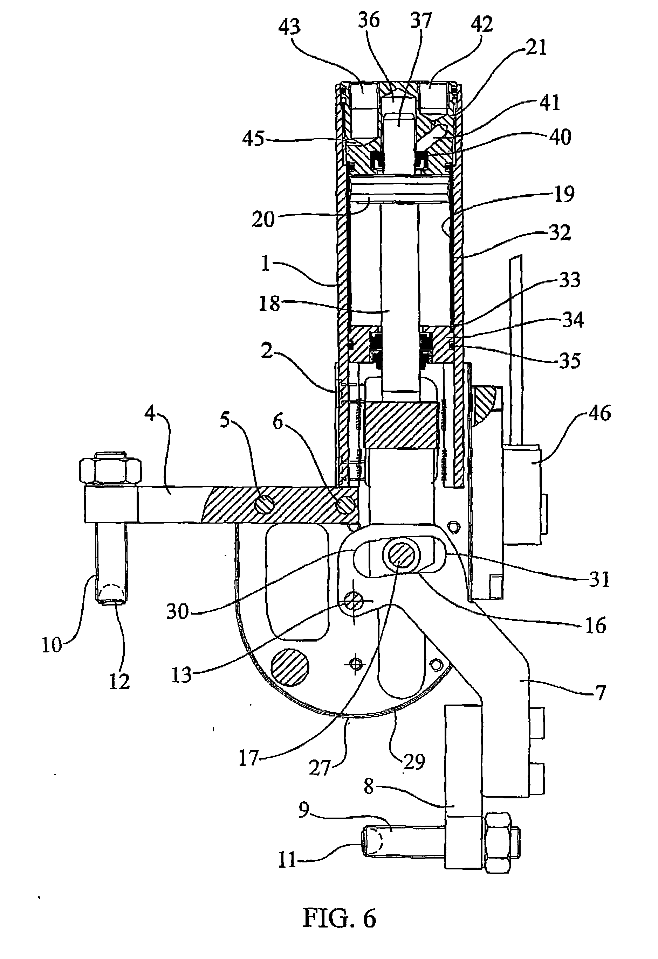

The swing arm -7- is activated by the action of the piston rod -18- between the closing position represented in figure 1 and the complete opening position showed in figure 6. The activation roller -17-, joined to the ends of the piston rod -18-, acts inside the special-shaped and curvy elongated hole -16-, which presents a gently curved upper area -30- and a straight inferior area -31-, so that, when the piston rod moves, the contact point of the roller assembled on the transverse shaft -17- with the elongated hole -16- of the swing arm makes this arm turn while its angle of incidence progressively decreases and the component on the arm grows in proportion and magnitude. The straight area represents an irreversibility area because of the shape of the stress component; so, the roller cannot transmit any vertical component, which prevents the arm from opening, even in the case of an external force appearing. The irreversibility caused by the effect of the roller on the straight area of the elongated hole is also achieved in the absence of the stress of the piston rod because of the action of the pneumatic cylinder.

Activation of the piston rod -18- takes place, as explained above, because of the action of the ensemble of the cylinder and pneumatic piston -19- and -20-. The cylinder -19- constitutes the internal casing of the cylindrical body -1-. Between this body -1- and the casing -19-, in which inside the piston -20- joined to the piston rod -18- slides, there is an interstice -32- for the passage of air. As it is seen in the detail of figure 1, the interstice -32- is used as a passage of air that will act in the lower side of the piston -20- on passing through the orifice -33- of the enveloping casing. The lower cover -34- is fitted in the enveloping casing -19- of the cylinder and it presents a slot for a tightness O-ring -35-.

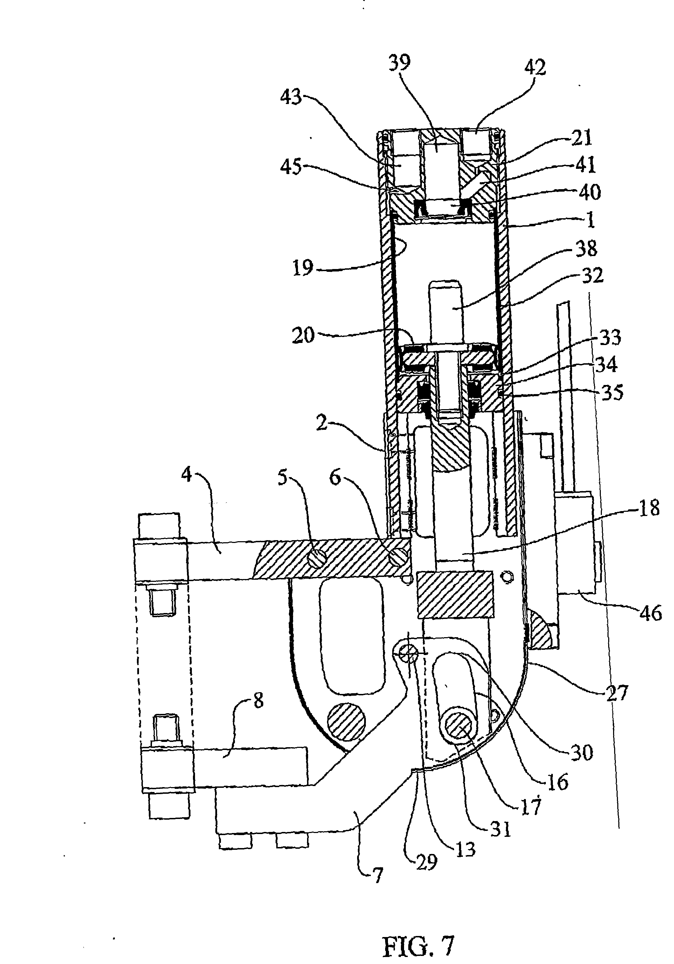

The upper cover -21- presents a lodging -36- that receives the head -37- of the screw fastening to the piston rod -18-; or , in case that, optionally, it is chosen to install a pneumatic shock absorber at the end of the stroke, this will be formed by a supplement -38- fitted together at the upper end of the piston rod -18-. This pneumatic shock absorber, marked on figure 7 with number - 39-, will be lodged at the upper part of the lodging -36-, and there will be a tightness seal -40- at the lower part of the said lodging, which is connected with an outlet -42- by a lateral passage -41-. The lateral orifice -45- connects cavity -43- of the cover itself with interstice - 32-, figure 7.

It is of great importance to detect the positions of the arm for synchronization and control of the ensemble of the clamps, and also to detect if the clamps work. On the clamp object of the present invention, this detection is carried out with sensors, as marked with number -46- at the rear of the ensemble of the clamp, for the main purpose of limiting the transverse width of the ensemble of the clamp, which is very important when designing welding tools, since it makes it possible to assemble a higher number of clamps at a certain space. Through the position of the present invention, it is possible to detect the arm through its movement using the mobile metal band, which provides a more accurate reading of the signal, and thus place with more precision the angular position of the arm.

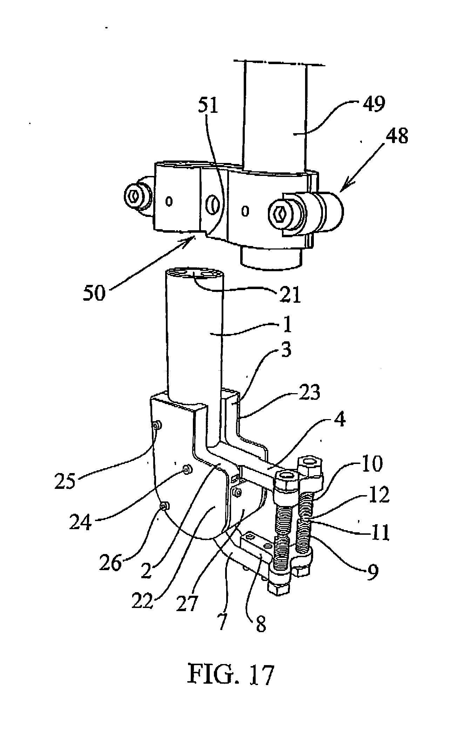

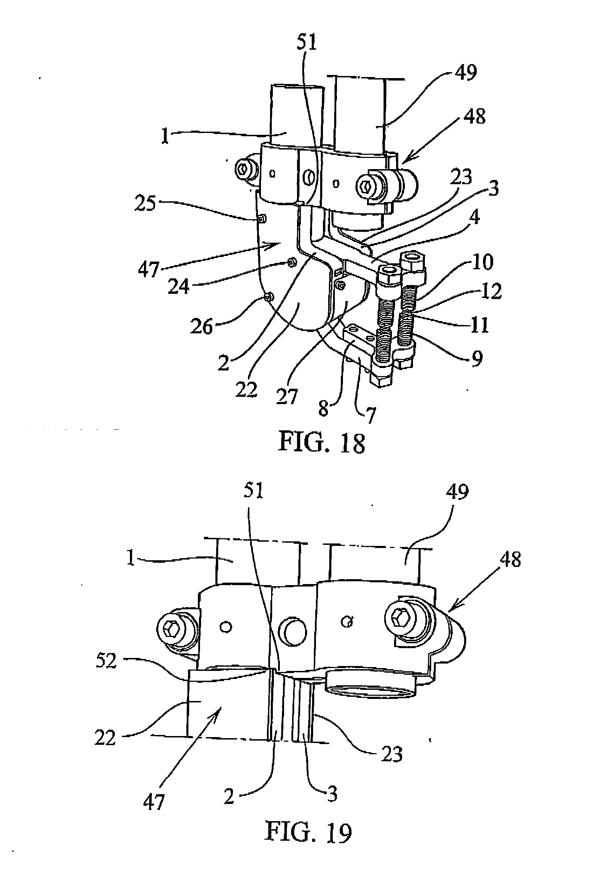

Another essential characteristic of the clamp object of the present invention lies in the position of the body of the clamp in relation to the manners of fastening to the frame of the mechanism of grip or welding tool. Through the characteristics of the present invention, it is possible to reproduce the correct position of the grip in relation to the ensemble, after dismantling the clamp for replacement, repair and other purposes. This is like that because of the existence of a positive mechanical centring between both elements, as it can be noticed in figures 18 and 19, in which it is established a mechanical centring between the body -47- of the clamp and the fastening bracket -48-. This bracket -48- joins the ensemble of the clamp to the structure of the machine or welding grip, represented by the bar or tube -49-. In this stated case, centring is made with a recess -50-, in figure 17, such as a trade -51- of the bracket -48-, which fits in a projection of the body - 47-, for example, its front edge -52-.

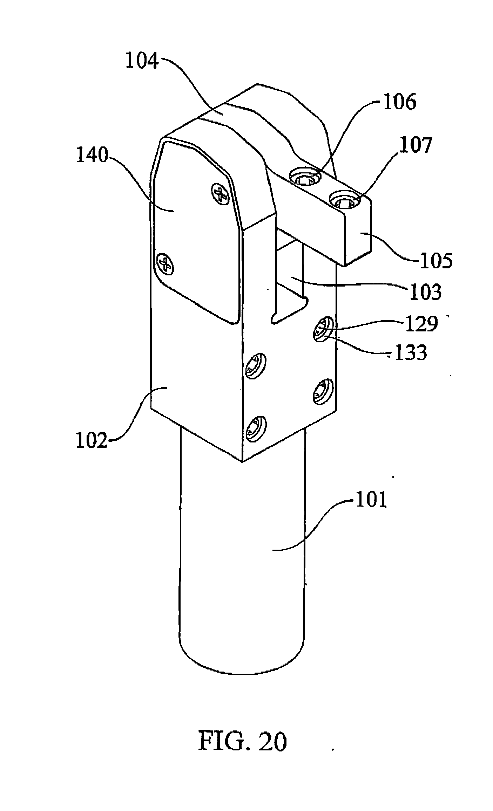

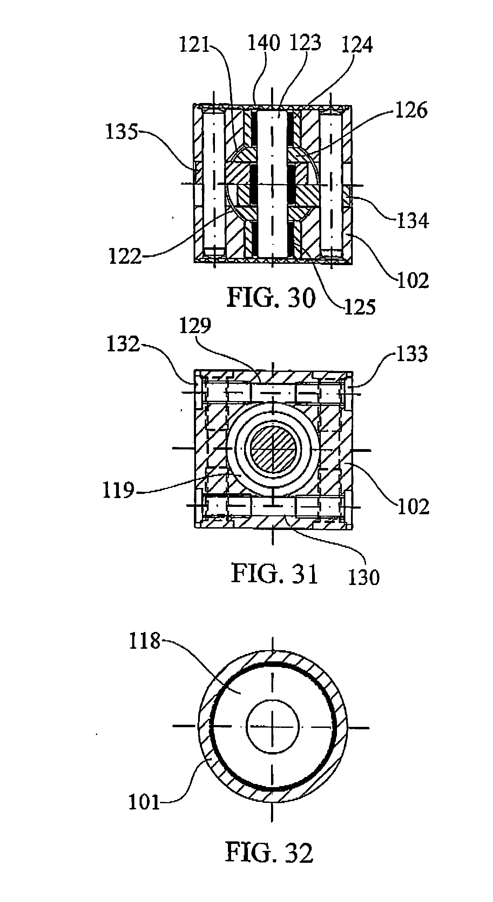

In the variant of figures 20 to 35, the clamp is formed by a body that is cylindrical in its lower part - 101- and that, in its upper part, it is square straight prismatic-shaped -102-, with a wide transverse opening - 103- that opens on the upper side. The turning arm -104- is fitted inside this transverse opening -103-, between the laterals, as seen in the figure, so the clamp is closed on the top side and thus welding splashes and other scraps are prevented from going in. It is not necessary, then, to put expressly any elements to close that part of the invention.

The turning arm -104- is extended with a front expansion -105- provided with the centring orifices -106- and -107-, in order to assemble some accessories and fastening couplings on it.

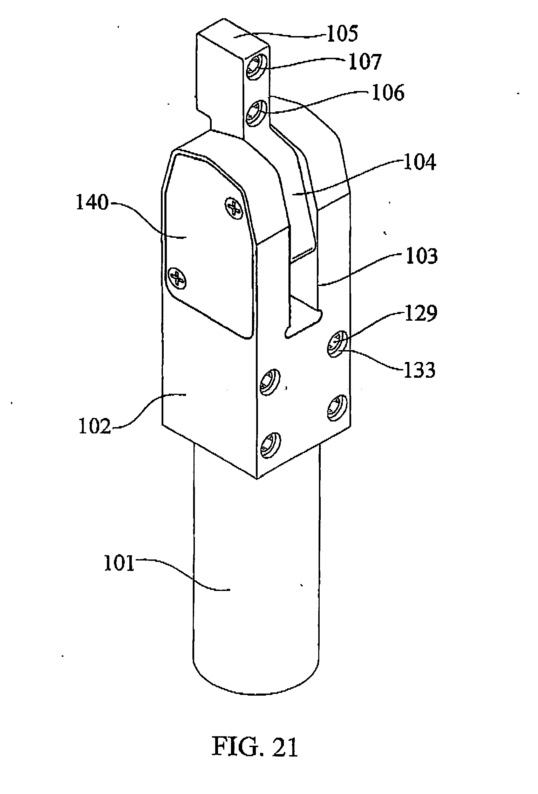

In figure 21 it can be seen a position of elements similar to figure 20, with another arm -104-, in a clamping position of the arm.

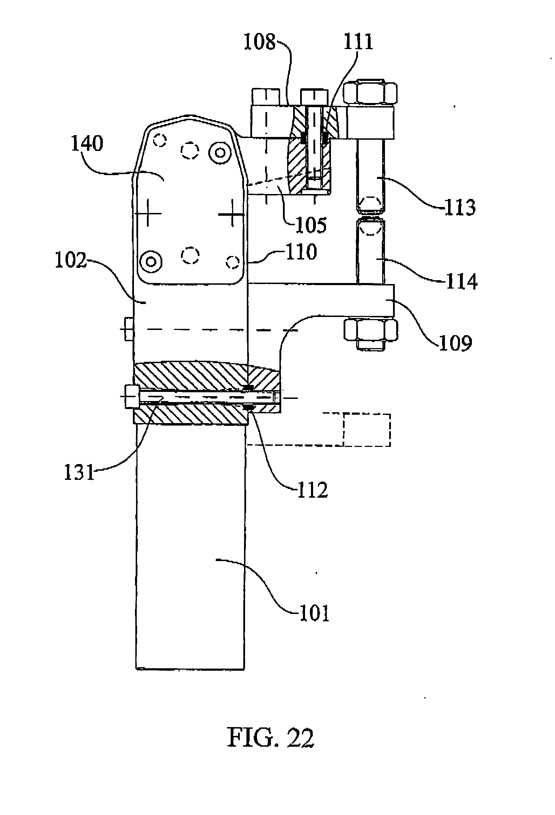

In figure 22 there is a diagram where it can be seen the accessories bearer of fastening screws -108- and -109-, respectively. These accessories -108- and -109- are placed on the upper arm -104-, on the front expansion -105- to be precise, and on the front side of the body -102- in the shape of a corbel -110-. One of the characteristics of the present improvements is that, on the lateral sides of the body -102- and on the upper side of the expansion -105- of the arm -104-, there are lodgings in which projecting guide bushings, such as -111- and -112-, figure 22, match up. These guide bushings -111- and -112- make it possible to centre accessories -108- and -109- that, for their part, also show lodgings with trade to match up with the projecting part of these guide bushings. Thus, it is possible to assemble again these accessories bearer of screws -108- and -109- after being dismantled for spare, maintenance and other purposes. In figure 22, there are two fastening screws, -113- and -114 respectively, although, as it should be appreciated, this is exclusively by way of example since fittings of the mountings bearer of screws can be very varied, both in number and in position of these fastening screws.

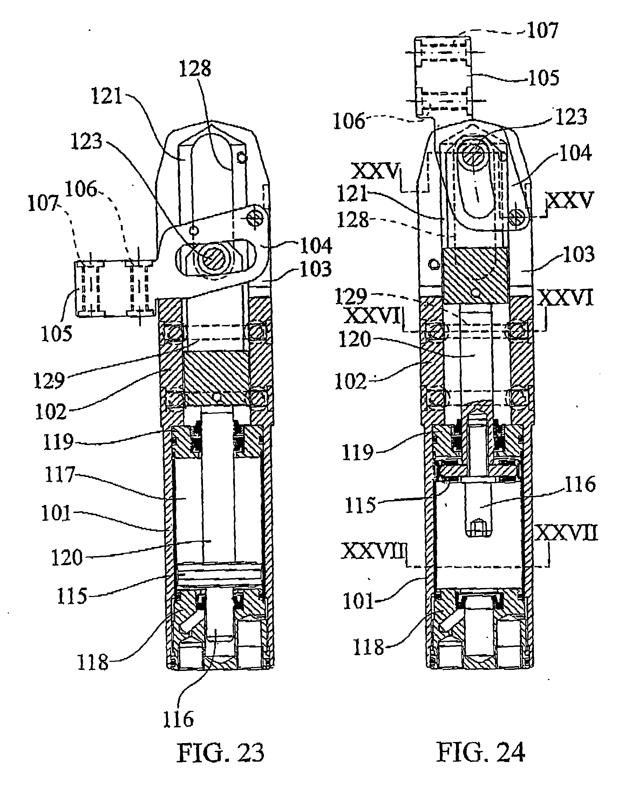

In figures 23 and 24, the body -101- is planned to receive inwardly the double-effect piston -115- with end cushioning piston rod -116-, which moves inside of chamber -117-. This chamber -117- is bordered by the lower cover - 118-, which bears the elements of the pneumatic shock absorber of the piston, and by the top partition -119-, provided with tightness elements for the piston rod -120-. The said piston rod -120- flows inside the top part -102- of the body and it ends at the top on the openings -128-. The shaft -123- slides along these openings -128- with both needle bearings -124- and -125-.

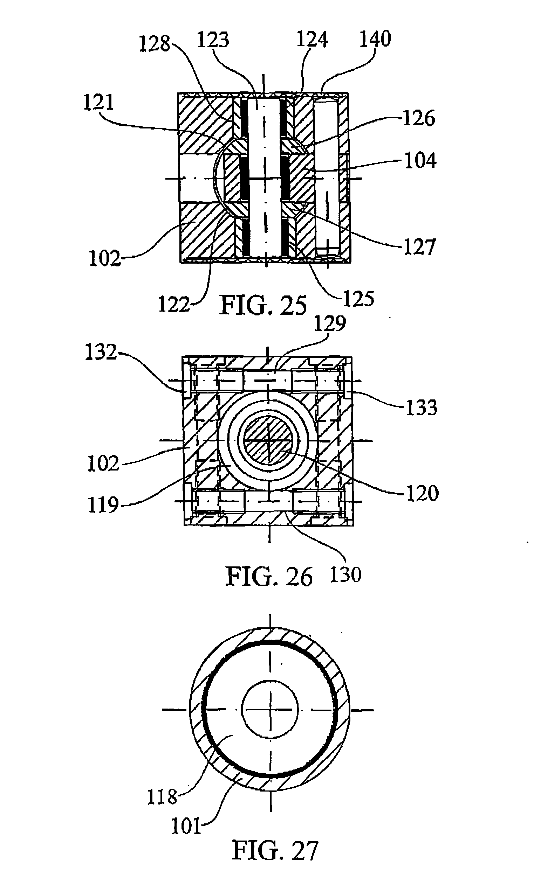

In figure 26, two transverse orifices -129- and -130- with straight strokes can be seen. These orifices -129- and -130- are planned to receive screws, such as screw -131- in figure 22, to fasten the accessories bearer of fastening screws. The said orifices have lodgings at the ends, such as -132- and -133- in orifice -129-, in order that they receive the projecting centring guide bushings -112-, shown in figure 22.

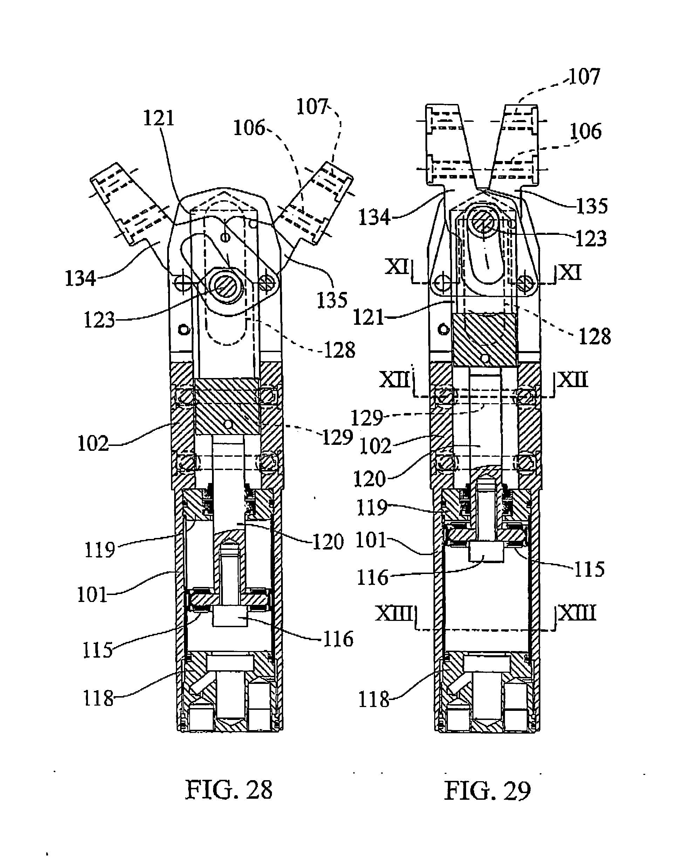

In figures 28 and 29 there is a version of the clamp in which all the elements match up with the other versions explained, except for the assembly of the two upper arms - 134- and -135- that, although they have similar structures, show the activating elongated holes combined with shaft - 123-. These two arms -134- and -135- work in the same way as arm -104- in figures 20 to 24. In this case, in figure 28, arms -134- and -135- are in open position, and in figure 29 they are in closed position. In all other respects, the structure of the clamp coincides with the one aforementioned.

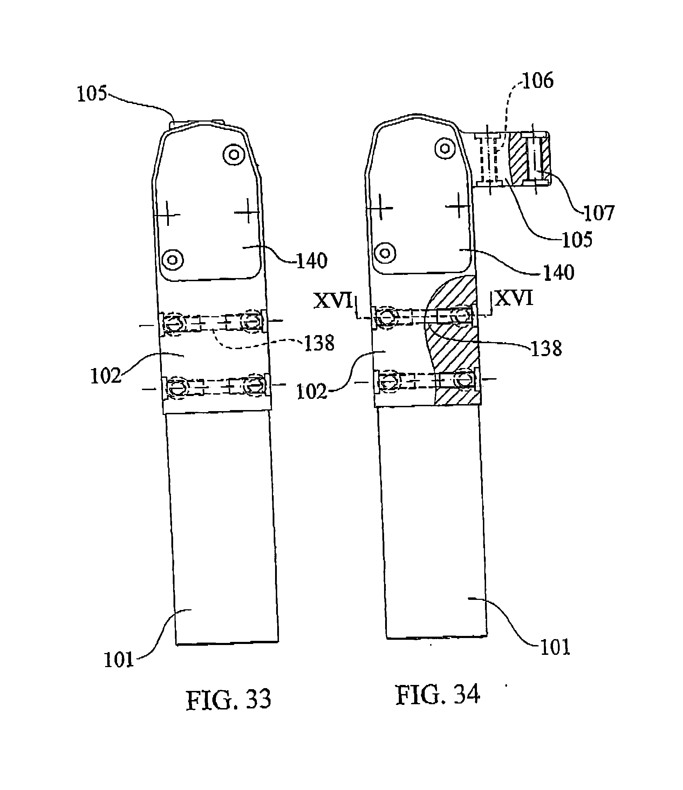

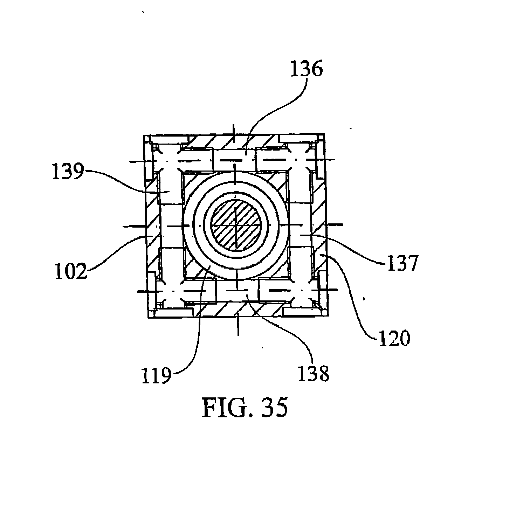

In figures 33 to 35 there are lateral views of a clamp, according to the present invention, in which, again, it can be seen the transverse orifices where to place the clamping screws of the fastening accessories, shown in figure 35 with numbers -136-, -137-, -138- and -139-. The mouths of these orifices on the sides of the body -102- show lodgings with trade, as aforementioned, for assembling the projecting guide bushings. Likewise, in the figures it can be seen the lateral covers of the upper body -102- that close the sliding openings at the ends of the shaft -123-. One of these covers has been named with number -140- in the figures.

Although the present invention has been described making reference to a specific example of the realization of the invention itself, it is understood that any technician on the subject, using the information contained in the present description, demands and drawings, will be able to introduce any variations on the invention that will be included in the invention itself provided they correspond to the scope of the enclosed demands.

## Claims

1. The invention relates to a clamp for automated welding installations, the type that comprises a body bearing fixed and mobile arms which are used to hold two or more sheets to be handled during welding. The invention has a pneumatic cylinder for activating the mobile arms of the clamp, which is **characterized in that** the aforementioned body takes the form of a central tubular element having two opposing lateral plates welded to the lower part thereof, in order to support the articulated arm disposed at the centre of the ensemble of the clamp between the lateral plates supporting the articulation shaft.

2. Clamp for automated welding installations, according to claim 1, **characterized** because the central tubular element of the body of the clamp is constituted from a calibrated tube with lateral millings at the lower end so as to support opposing lateral plates partially fitted which are joined to the tubular element by welding.

3. Clamp for automated welding installations, according to claim 1, **characterized** because the opposing lateral plates of the body of the clamp are constituted by calibrated steel plates cut out on their periphery and provided with internal openings.

4. Clamp for automated welding installations, according to claim 3, **characterized** because the opposing lateral plates of the body of the clamp are cut out and their openings are made by machining with laser beams.

5. Clamp for automated welding installations, according to claim 1, **characterized** because the opposing lateral plates of the body of the clamp present lightening openings, orifices for assembling the articulation shaft of the mobile arm of the clamp and elongated holes for guiding a transverse shaft bearer of the activation bearing of the mobile arm of the clamp.

6. Clamp for automated welding installations, according to claim 1, **characterized** because the mobile arm of the clamp takes an L-shaped position and presents on its internal end an orifice for the transverse shaft that causes the arm to turn. This said mobile arm is assembled between the lateral plates of the body of the clamp and an elongated hole in order to receive the activation roller, which is joined to the rod of the pneumatic cylinder that activates the clamp. The elongated hole of the arm presents a straight inferior area and a gently curved upper area to cause the progressive variation of the angle of incidence between the transverse shaft activating the swing arm and the elongated hole of this arm, and thus the straight area provides an irreversibility area on triggering.

7. Clamp for automated welding installations, according to claim 1, **characterized** because the gap between the two plates assembled in opposite sides of the body of the clamp is covered on its free lower and rear part by a metal band fitted together on it. This metal band is provided with a longitudinal opening in which the mobile arm of the clamp passes. A second metal band, shorter, is combined with this mobile arm and it coincides with the internal side of the first metal band so that it covers the movable closing of its longitudinal opening, in accordance with the positions of the mobile arm.

8. Clamp for automated welding installations, according to claim 1, **characterized** because the pneumatic cylinder that activates the mobile arm of the clamp is lodged inside the tubular element of the body of the clamp between each of the upper and lower fixed covers, tightened in relation to the said tubular element, by means of cylindrical casing joined to these upper and lower covers and provided with a light interstice with regard to the internal side of the tubular element. This interstice is used as a passage of air connecting the upper with the lower parts of the cylinder, in which inside a piston associated with the rod activating the mobile arm of the clamp slides.

9. Clamp for automated welding installations, according to claim 8, **characterized** because the upper cover of the pneumatic cylinder presents a central axial lodging with a lower cylindrical area higher in diameter capable of receiving the top head of the bolt combining the piston with the piston rod that activates the mobile arm, in the upper deadlock position of the piston.

10. Clamp for automated welding installations, according to claim 8, **characterized** because the element fastening the piston to the piston rod that activates the mobile arm presents, in its upper part, an expansion that can fit inside the axial orifice of the upper cover of the pneumatic cylinder. Consequently, there is a pneumatic shock absorber effect together with an air outlet with restricted and adjustable flow.

11. Clamp for automated welding installations, according to claim 8, **characterized** because the upper cover of the cylinder that activates the mobile arm presents, moreover, an air cavity that can connect with the upper part of the cylinder through a smaller-diameter orifice and with the interstice between the cylinder casing and the tubular element of the body through a lateral flow.

12. Clamp for automated welding installations, according to the aforementioned claims, **characterized** because detection of the angular position of the mobile arm is executed by detecting the end of the movable metal band associated to the mobile arm itself.

13. Clamp for automated welding installations, according to claims 1 and 12, **characterized** because the sensor housing that detects the angular turning position of the mobile arm fits together with the rear side of the ensemble of the clamp, opposite to the fastening screws of the clamp itself.

14. Clamp for automated welding installations, according to claim 1, **characterized by** the position of a coupling which is combined with recesses and projections between the body of the clamp and the bracket that fastens this clamp to the structure of the grip or welding tool, and thus it is determined a fixed spatial position between both the body of the clamp and the structure of the grip or welding tool, independently of the assembly and dismantling operations of the clamp with regard to the welding machine.

15. Clamp for automated welding installations, according to claim 14, **characterized** because the coupling between the body of the clamp and the bracket that fastens this clamp to the grip or welding tool is made through a lodging on the bracket. This lodging is combined in shape and can fit with the top edge of the body of the clamp.

16. Clamp for automated welding installations, according to claim 1, **characterized** because the closure of the lateral plates of the body of the clamp is made with each of the calibrated covers that coincide onto the external sides of these said plates in an adjusting and compact way with no tightness auxiliary components.

17. Clamp for automated welding installations, according to claim 1, **characterized by** the unit setting-up of the body of the clamp. This unit comprises the body of the drive pneumatic cylinder at the lower part and, at the upper part, a prismatic and straight in shape body provided with a wide transverse recess opened at the top in order to lodge a fitted turning arm, which is planned to move the mobile mounting bearer of fastening screws. Thus, this turning arm is lodged in this transverse opening, closing the upper part of the clamp itself in order to prevent welding splashes and other scraps from going in. The sides of this said recess presents each of the longitudinal half-rod guides with each of the straight passing openings planned to receive the ends of the drive shaft of the turning arm through needle bearings.

18. Clamp for automated welding installations, according to claim 17, **characterized** for comprising the position of orifices in the body of the clamp, provided with layered lodgings in their mouths so as to receive projecting guide bushings to centre the accessories that bear fastening screws.
